# EUROPÄISCHE PATENTSCHRIFT

(11) **EP 1 092 818 B1**
(45) Veröffentlichungstag und Bekanntmachung des Hinweises auf die Patenterteilung: **29.11.2006**
(21) Anmeldenummer: 00121980.7
(22) Anmeldetag: 10.10.2000
(51) Int. Cl.: E04C 2/08

(54) **Verfahren zur Erhöhung der Steifigkeit von flächenhaften Bauteilen sowie flächenhaftes Bauteil und dessen Verwendung**
Method for increasing the stiffness of panel-like elements, panel-like element and its use
Méthode pour augmenter la raideur d'éléments plans ainsi qu' élément plan et son utilisation

(30) Priorität: 11.10.1999 DE 19948957
(43) Veröffentlichungstag der Anmeldung: 18.04.2001
(73) Patentinhaber: ALSTOM LHB GmbH, 38239 Salzgitter (DE)
(72) Erfinder: Nowack, Ulrich, Dipl.-Ing., 38259 Salzgitter (DE)

(56) Entgegenhaltungen:
- EP-A- 0 278 268
- US-A- 4 731 280

## Beschreibung

Die Erfindung betrifft ein Verfahren zur Erhöhung der Steifigkeit von flächenhaften Bauteilen mit den im Oberbegriff des Anspruchs 1 genannten Merkmalen, ein flächenhaftes Bauteil mit den im Oberbegriff des Anspruchs 7 genannten Merkmalen sowie die Verwendung derartiger flächenhafter Bauteile.

Verfahren zur Erhöhung der Steifigkeit von flächenhaften Bauteilen, insbesondere Blechen, sind bekannt. Dabei werden üblicherweise die Bauteile mit partiellen Versteifungsstrukturen im Bereich einer Großfläche des Bauteils versehen. Solche Versteifungsstrukturen dienen dazu, eine dauerhafte Verformung der Bauteile infolge auftretender Biegekräfte zu verhindern.

Es ist bekannt, insbesondere Bleche derart zu verstärken, daß in Bereichen, an denen hohe Biegekräfte angreifen, großflächig ein weiteres Blech, insbesondere Glätt- oder Wellbleche, durch Fügen angebracht wird. Neben dem technisch oft anspruchsvollen Zuschnitt solcher zusätzlicher Bleche ist nachteilig, daß es zu einer erheblichen Gewichtszunahme kommt.

Weiterhin ist bekannt, durch Einwalzen oder Stanzen Versteifungsstrukturen (Sicken) in ausgewählte Bereiche des flächenhaften Bauteils einzubringen. Nachteilig an einem solchen Verfahren ist zum einen, daß das Einwalzen und Stanzen technisch aufwendig ist, da Baugröße des Bauteils und spezifische Konstruktionsmerkmale, wie Aufbauten, Verstrebungen oder dergleichen, berücksichtigt werden müssen. Zum anderen ist ein auf diese Weise erzielter Versteifungseffekt relativ gering im Vergleich zu einem Versteifungseffekt, der durch eine Erhöhung einer Plattendicke des Bauteils erfolgt.

Die US-A-4 731 280 betrifft ein Werkstück mit Rippen und ein Verfahren zu seiner Herstellung. Beispielhaft wird ein großflächiges Werkstück genannt. Die sich kreuzenden Rippen des Werkstückes sind durch lagenweises Auftragen von Schweißnähten auf einen Grundkörper im Lichtbogenaufbau-Schweißverfahren hergestellt. Die Rippen selbst weisen einen Überlappungsbereich auf und sind im Überlappungsbereich miteinander verbunden, wobei in jeder Schweißlage die Schweißnähte einer Rippe stets die Schweißnähte einer kreuzenden Rippe überdeckt. Die auf diese Weise aufgebauten Rippen versteifen das gesamte Werkstück und sind praktisch ineinander verzahnt, wodurch eine gute Festigkeit des Werkstücks bei nur geringen Inhomogenitäten in den Rippen und im Werkstück erreicht wird. Es ist vorgesehen, die ausgewählte Beschichtungsstruktur auf das gesamte Bauteil aufzutragen um die erwähnten Inhomogenitäten in den Rippen und dem Bauteil zu vermeiden. Nachteile des gewählten Verfahrens sind allerdings die aufwändige und nicht unproblematische Herstellung der Beschichtungsstruktur und das Sicherstellen der Qualitätsparameter im Überlappungsbereich sowie das Aufbringen von Material und damit Mehrgewicht auf das flächige Werkstück für alle Bereiche, auch in den weniger belasteten Bereichen.

Der Erfindung liegt die Aufgabe zugrunde, die Steifigkeit eines flächenhaften Bauteils in einfacher Weise und bei geringer Gewichtszunahme wesentlich zu erhöhen. Weiterhin soll ein Verfahren zur Verfügung gestellt werden, das ein Erzeugen von Versteifungsstrukturen auch auf sehr komplex dimensionierte Bauteile erlaubt und damit einen Fertigungsablauf hin zu einem gewünschten Werkstück flexibler gestaltet.

Erfindungsgemäß wird diese Aufgabe durch das Verfahren zur Erhöhung der Steifigkeit von flächenhaften Bauteilen mit den Merkmalen des Anspruchs 1 und ein flächenhaftes Bauteil mit den im Anspruch 7 genannten Merkmalen gelöst. Dadurch, daß die Versteifungsstrukturen durch additives Fügen wenigstens einer zusätzlichen Beschichtungsstruktur auf wenigstens eine der Großflächen der Bauteile erhalten werden, kann die Steifigkeit eines solchen Bauteils stark erhöht werden, ohne daß es zu einer wesentlichen Gewichtszunahme kommt. Weiterhin ist es möglich, den Fertigungsablauf des Werkstücks wesentlich flexibler zu gestalten, da mit Hilfe des erfindungsgemäßen Verfahrens die Versteifungsstrukturen auch zu einem bereits fortgeschrittenen Zeitpunkt der Fertigung aufgebracht werden können.

Ferner hat es sich als vorteilhaft erwiesen, daß die aufgebrachten Beschichtungsstrukturen eine Eigenschwingung des Bauteils dämpfen und sich zur akustischen Dämpfung eignen. Somit können zusätzliche kostspielige Dämpfungsschichten entfallen.
In einer bevorzugten Ausführungsform sind die zusätzlich aufgebrachten Beschichtungsstrukturen symmetrisch, insbesondere punktsymmetrisch, aufgebaut. Auf diese Weise kann einerseits auf Erfahrungswerte hinsichtlich geeigneter Konturen bei einer Herstellung von Sicken zurückgegriffen werden, und andererseits kann eine gegebene symmetrische Kontur in einfacher Weise auf- und abdimensioniert werden, das heißt einem bestimmten Bereich des Bauteils angepaßt werden. Eine Ausgestaltung der zusätzlichen Beschichtungsstruktur kann selbstverständlich auch über ein Rechenverfahren, beispielsweise FEM (Finite Elemente Methode), erfolgen, indem eine gewünschte Steifigkeit in einem bestimmten Bereich des Bauteils vorgegeben wird und ein daraus resultierendes Layout der Beschichtungsstruktur berechnet wird.

Weiterhin ist vorteilhaft, eine Beschichtung der Großfläche mit einem Beschichtungsmaterial mittels einfacher Fügeverfahren durchzuführen. Dazu eignen sich Kalt- und Heißklebetechniken oder auch Spritzverfahren, bei denen ein Kunststoff als Beschichtungsmaterial gemäß dem vorgegebenen Layout aufgesprüht wird. Durch solche Verfahren ist es nun möglich, die Versteifungsstrukturen auch optisch vorteilhafter zu gestalten.

Ferner können metallische Beschichtungsmaterialien, beispielsweise durch Auflöten von Drahtrippen, Aufschmelzen von Metallpulvern oder Aufschweißen von Metallraupen oder dergleichen, gefügt werden. Dabei ist es besonders vorteilhaft, Laserschweißen als ein thermisches Fügeverfahren einzusetzen, um eine Automatisierung der Herstellung unter Vermeidung von Zusatzstoffen zu ermöglichen. Insgesamt kann durch die Erfindung eine wesentliche Erhöhung der Steifigkeit des Bauteils erfolgen, so daß arbeits- und kostenintensive Fertigungsschritte, wie Richten oder Spannen, verringert oder sogar entfallen können.
Weitere bevorzugte Ausgestaltungen der Erfindung ergeben sich aus den übrigen, in den Unteransprüchen genannten Merkmalen.
Die Erfindung wird nachfolgend in einem Ausführungsbeispiel anhand der zugehörigen Zeichnungen näher erläutert. Es zeigen:
- Figur 1: eine Draufsicht und eine Schnittansicht durch ein Bauteil mit Beschichtungsstrukturen;
- Figur 2: eine Draufsicht auf ein Bauteil gemäß Figur 1 mit zusätzlichen Stützstreben und
- Figuren 3 und 4: weitere Ausführungsformen von Beschichtungsstrukturen.

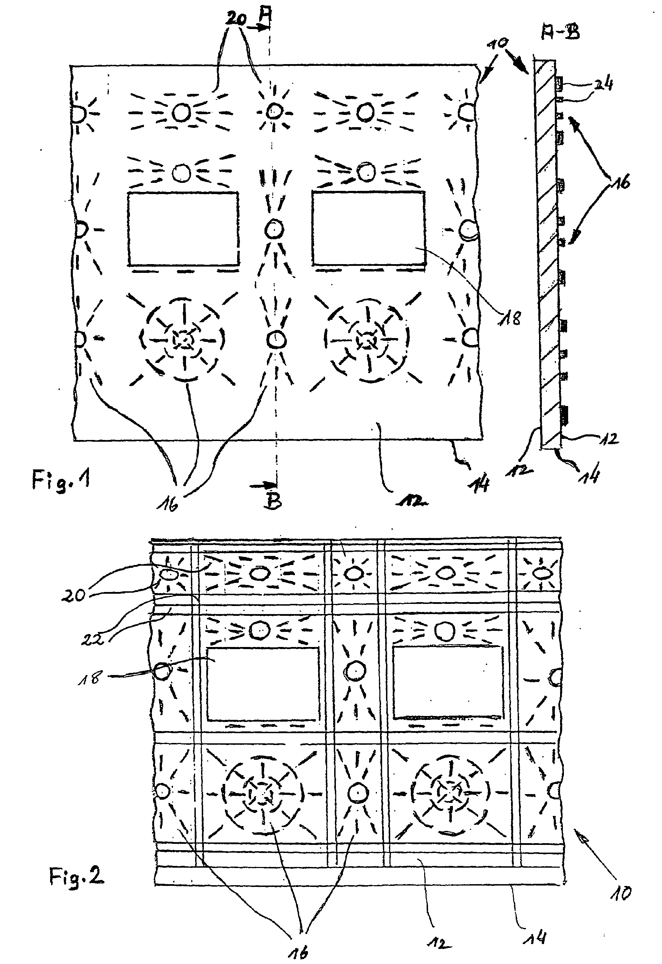

Die Figur 1 zeigt in einer schematischen Draufsicht und einer Schnittansicht entlang einer Linie A-B ein flächenhaftes Bauteil 10. In diesem konkreten Ausführungsbeispiel dient das Bauteil 10 als eine Stirn- oder Seitenwand eines Wagenkastens von Schienenfahrzeugen. Dazu weist das Bauteil 10 unter anderem Ausschnitte 18 auf, die üblicherweise zur Aufnahme eines Fensters oder dergleichen dienen. Selbstverständlich kann neben einer Anwendung des Verfahrens im Bereich großflächiger Bauteile 10 für Schienenfahrzeuge (Verkleidungselement) auch ein Einsatz des Verfahrens in anderen technischen Bereichen erfolgen, in denen als Konstruktionseinheiten großflächige Bauteile verwendet werden. Als beispielhafte Anwendungen seien hier Sichtblenden für Gebäude, Container, Vorratsbehälter, Transportbehälter, Fahrzeugkarosserien oder Schiffskonstruktionen genannt.

Das Bauteil 10 besitzt in Längserstreckung zwei Großflächen 12 und zwei Schmalflächen 14. Zur Erhöhung einer Steifigkeit wird auf die Großflächen 12 - in diesem Fall nur einseitig - eine Versteifungsstruktur in Form einer zusätzlichen Beschichtungsstruktur 16 aufgebracht. Wie ersichtlich, werden einzelne Beschichtungsstrukturen 16 bestimmten Bereichen 20 des Bauteils 10 zugeordnet. Eine solche Zuordnung kann beispielsweise infolge weiterer konstruktiver Maßnahmen - neben der Anordnung der Ausschnitte 18 -, wie einer Aufbringung von Stützstreben 22, erfolgen (Figur 2). Soll das Bauteil 10 in einem nachfolgenden Fertigungsschritt in dem Bereich der Beschichtungsstrukturen 16 unter einem großen Radius gebogen werden, so ist es vorteilhaft, während des Biegens eine elastische Kunststofflage im Bereich der Beschichtungsstrukturen 16 aufzudrücken. Auf diese Weise kann zumindest bei Verstärkungsteilen im Bereich von 1 bis 2 mm und relativ abgerundeten Konturen der Beschichtungsstrukturen 16 das Biegen auch in dem Bereich der Beschichtungsstrukturen 16 ausgeführt werden.

Die zusätzlich angeordneten sich kreuzenden Stützstreben 22 werden zuerst mit dem Bauteil 10 und nachfolgend untereinander zur Ausbildung einer Stützstruktur verschweißt. Da zum einen die Steifigkeit des Bauteils 10 wesentlich erhöht wird, kann zusätzliches Richten oder Spannen der Stirn- oder Seitenwände verringert werden und gegebenenfalls entfallen. Zum anderen dämpfen die aufgebrachten Beschichtungsstrukturen 16 eine Eigenschwingung des Bauteils 10 und es kann somit auf eine zusätzliche Auftragung einer akustischen Dämpfungsschicht verzichtet werden. Insgesamt resultiert damit ein verkürzter Fertigungsprozeß.

Der Aufbau und die Anzahl der Beschichtungsstrukturen 16, deren Dimensionierung und Ausgestaltung hängt von der zu erzielenden Steifigkeit in den Bereichen 20 des Bauteils 10 ab. Bevorzugt wird eine Beschichtungsstruktur 16 jedem Bereich 20 zugeordnet und den Abmessungen dieses Bereichs 20 angepaßt.

Die Beschichtungsstruktur 16 ist in einzelne, rippenartige Segmente 24 unterteilt, die auf der Großfläche 12 aufgebracht sind. Ein Schnitt entlang der Linie A-B durch das Bauteil 10 verdeutlicht, daß es sich hierbei um ein zusätzlich auf der Großfläche 12 aufgebrachtes Beschichtungsmaterial handelt, das in Form von Segmenten 24 die Beschichtungsstruktur 16 ausbildet. Jede Beschichtungsstruktur 16 wird entsprechend einer vorgegebenen Kontur und Layout erzeugt.

Eine Lage und die Dimensionierung der Beschichtungsstruktur 16 sowie eine Ausgestaltung der Kontur können durch geeignete Rechenprogramme, beispielsweise FEM (Finite Elemente Methode), vorab festgelegt werden. Dazu wird im allgemeinen eine in einem bestimmten Bereich 20 erwünschte Steifigkeit des Bauteils 10 vorgegeben und deren Verwirklichung unter Berücksichtigung geeigneter Konturen berechnet. Vorteilhaft ist es dabei, einem bereits bei einer Herstellung von Sicken gewonnenen Erfahrungsschatz hinsichtlich der Ausgestaltung der Konturen zu berücksichtigen.

Eine Aufbringung der Beschichtungsstruktur 16 erfolgt durch additives Fügen. Dazu eignen sich insbesondere Fügeverfahren wie Heiß- und Kaltklebetechniken oder aber auch Spritzverfahren, bei denen ein Kunststoff auf die Großfläche 12 gemäß den vorgegebenen Konturen und Layouts aufgesprüht oder aufgedruckt wird. Handelt es sich um metallische Bauteile 10, insbesondere Blech, so ist es vorteilhaft, die Beschichtungsstruktur 16 durch Auflöten von Drahtrippen, Aufschmelzen von Metallpulvern oder Aufschweißen von Metallraupen zu erzeugen. In diesen Fällen ist Laserschweißen als ein thermisches Fügeverfahren besonders bevorzugt, da sich dieses in einfacher Weise automatisieren läßt. Ferner kann auf die zusätzliche Verwendung von Hilfsstoffen verzichtet werden.

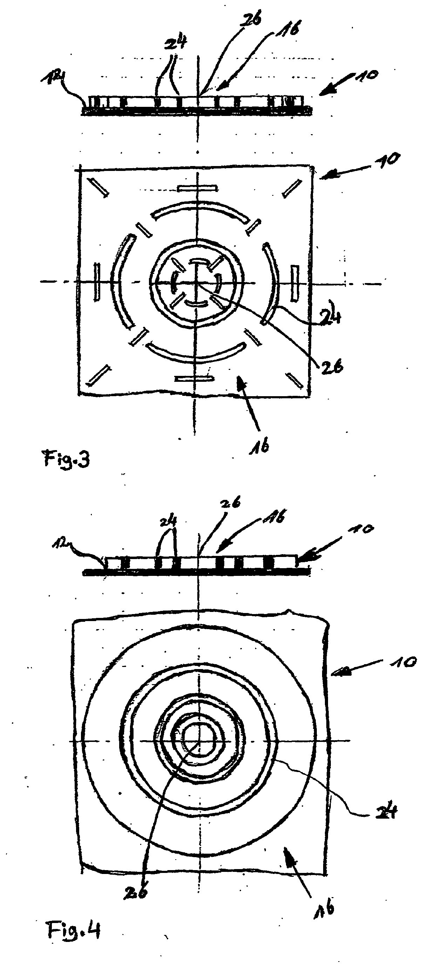

Die Figuren 3 und 4 zeigen zwei beispielhafte Konturen der Beschichtungsstruktur 16, wie sie sich durch Berechnung oder aufgrund von Erfahrungswerten ergeben können. Die Konturen sind dabei überwiegend symmetrisch, insbesondere punktsymmetrisch, zu einem Mittelpunkt 26 aufgebaut. Aufgrund der sehr großen möglichen Formvielfalt der verwendbaren Konturen können häufig verschiedene Konturen eine ähnliche Steifigkeit des Bauteils 10 ermöglichen, so daß eine konkrete Lösung sehr genau den gegebenen Notwendigkeiten angepaßt werden kann. Die Steifigkeit des Bauteils 10 wird durch die Beschichtungsstruktur 16 im wesentlichen aufgrund einer partiellen Erhöhung einer Plattendicke des Bauteils 10 verstärkt. Die Segmente 24 der Beschichtungsstruktur 16 weisen gemäß den Schnittansichten der Figuren 3 und 4 eine gleiche Höhe auf. Denkbar ist aber auch, daß die Höhe der Segmente 24 in Richtung des Mittelpunkts 26 der Beschichtungsstruktur 16 linear oder progressiv ansteigt, abfällt oder aber auch alternierend gestaltet wird.

### Bezugszeichenliste

- 10: Bauteile
- 12: Großfläche
- 14: Schmalfläche
- 16: Beschichtungsstruktur
- 18: Ausschnitt
- 20: Breite des Bauteils 10
- 22: Stützstrebe
- 24: Segment
- 26: Mittelpunkt

## Patentansprüche

1. Verfahren zur Erhöhung der Steifigkeit von Großflächen (12) von flächenhaften Bauteilen (10), wobei die Bauteile (30) mit Versteifungsstrukturen versehen werden und wobei die Versteifungsstrukturen durch additives Fügen wenigstens einer zusätzlichen Beschichtungsstruktur (16) auf wenigstens einer der Großflächen (12) der Bauteile (10) erzeugt werden, **dadurch gekennzeichnet, dass** einzelne Beschichtungsstrukturen (16) bestimmten Bereichen (20) des Bauteils (10) zugeordnet werden und dabei partiell eine Erhöhung der Steifigkeit des Bauteils (10) bewirken und dass die Beschichtungsstrukturen (16) in einzelne, rippenartige Segmente (24) unterteilt, auf die Großflächen (12) aufgebracht werden und in Form von Segmenten (24) die Beschichtungsstrukturen (16) ausbilden.

2. Verfahren nach Anspruch 1, **dadurch gekennzeichnet, dass** eine Lage, eine Dimensionierung und eine Kontur der Beschichtungsstruktur (16) durch eine Vorgabe der Steifigkeit für einen bestimmten Bereich (20) des Bauteils (10) berechnet werden.

3. Verfahren nach Anspruch 1 oder 2, **dadurch gekennzeichnet, dass** die zusätzliche Beschichtungsstruktur (16) durch heißes oder kaltes Kleben eines Beschichtungsmaterials auf der wenigstens einen Großfläche (12) aufgebracht wird.

4. Verfahren nach den Ansprüchen 1 oder 2, **dadurch gekennzeichnet, dass** die Beschichtungsstruktur (16) durch Aufspritzen von Kunststoff auf die wenigstens eine Großfläche (12) erzeugt wird.

5. Verfahren nach den Ansprüchen 1 oder 2, **dadurch gekennzeichnet, dass** die Beschichtungsstruktur (16) durch Auflöten von Drahtrippen, Aufschmelzen von Metallpulver oder Aufschweißen von Metallraupen mittels eines thermischen Fügeverfahrens erfolgt.

6. Verfahren nach Anspruch 5, **dadurch gekennzeichnet, dass** das Fügen durch Laserschweißen erfolgt.

7. Flächenhaftes Bauteil mit wenigstens einer partiellen Versteifungsstruktur, wobei die wenigstens eine Versteifungsstruktur von einer zusätzlich auf wenigstens einer der Großflächen (12) des Bauteils (10) gefügten Beschichtungsstruktur (16) gebildet ist, **dadurch gekennzeichnet, dass** bestimmten Bereichen (20) des Bauteils (10) einzelne Beschichtungsstrukturen (16) zugeordnet sind und dass die Beschichtungsstrukturen (16) in einzelne, rippenartige Segmente (24) unterteilt sind und in Form von Segmenten (24) die Beschichtungsstrukturen (16) ausbilden.

8. Flächenhaftes Bauteil nach Anspruch 7, **dadurch gekennzeichnet, dass** die segmentförmigen Beschichtungsstrukturen (16) symmetrisch, insbesondere punktsymmetrisch, um einen Mittelpunkt (26) angeordnet sind.

9. Flächenhaftes Bauteil nach den Ansprüchen 7 und 8, **dadurch gekennzeichnet, dass** die Beschichtungsstrukturen (16) aus Kunststoff bestehen.

10. Flächenhaftes Bauteil nach den Ansprüchen 7 und 8, **dadurch gekennzeichnet, dass** die Beschichtungsstrukturen (16) aus Metall bestehen.

11. Flächenhaftes Bauteil nach den Ansprüchen 9 oder 10, **dadurch gekennzeichnet, dass** die Segmente (24) einer Beschichtungsstruktur (16) eine gleiche Höhe aufweisen.

12. Flächenhaftes Bauteil nach den Ansprüchen 9 oder 10, **dadurch gekennzeichnet, dass** die Segmente (24) einer Beschichtungsstruktur (16) in Richtung des Mittelpunktes (26) linear oder progressiv in ihrer Höhe ansteigen und/oder abfallen.

13. Verwendung eines flächenhaften Bauteils nach einem der Ansprüche 7 bis 12 als Wandelement eines Wagenkastens für Schienenfahrzeuge.

14. Verwendung eines flächenhaften Bauteils nach einem der Ansprüche 7 bis 12 als eine Konstruktionseinheit für Schiffe, Flugzeuge, Kraftfahrzeuge, Transport- und Vorratsbehälter, Container, Sichtblenden für Gebäude oder dergleichen.

15. Verwendung eines flächenhaften Bauteils nach einem der Ansprüche 7 bis 12 als ein akustisches Dämpfungselement.

## Claims

1. Method for increasing the stiffness of large surfaces (12) of panel-like components (10), wherein the components (10) are provided with stiffening structures and wherein the stiffening structures are produced by additive joining of at least one additional coating structure (16) on at least one of the large surfaces (12) of the components (10), **characterised in that** individual coating structures (16) are associated with certain regions (20) of the component (10) and thus partially bring about an increase in the stiffness in the component (10) and **in that** the coating structures (16), divided into individual, rib-like segments (24), are applied to the large surfaces (12) and, in the form of segments (24), form the coating structures (16).

2. Method according to claim 1, **characterised in that** a position, a dimensioning and a contour of the coating structure (16) are calculated by an input of the stiffness for a certain region (20) of the component (10).

3. Method according to claim 1 or 2, **characterised in that** the additional coating structure (16) is applied by hot or cold adhesion of a coating material on the at least one large surface (12).

4. Method according to claims 1 or 2, **characterised in that** the coating structure (16) is produced by spraying plastics material onto the at least one large surface (12).

5. Method according to claims 1 or 2, **characterised in that** the coating structure (16) is implemented by means by soldering on wire ribs, melting on metal powder or welding on metal beads by means of a thermal joining method.

6. Method according to claim 5, **characterised in that** the joining takes place by means of laser welding.

7. Panel-like component comprising at least one partial stiffening structure, wherein the at least one stiffening structure is formed by an additional coating structure (16) joined on to at least one of the large surfaces (12) of the component (10), **characterised in that** individual coating structures (16) are associated with certain regions (20) of the component (10) and **in that** the coating structures (16) are divided into individual, rib-like segments (24) and, in form of segments (24), form the coating structures (16).

8. Panel-like component according to claim 7, **characterised in that** the segment-like coating structures (16) are arranged symmetrically, in particular point-symmetrically, about a central point (26).

9. Panel-like component according to claims 7 and 8, **characterised in that** the coating structures (16) consist of plastics material.

10. Panel-like component according to claims 7 and 8, **characterised in that** the coating structures (16) consist of metal.

11. Panel-like component according to claims 9 or 10, **characterised in that** the segments (24) of a coating structure (16) have the same height.

12. Panel-like component according to claims 9 or 10, **characterised in that** the segments (24) of a coating structure (16) rise and/or fall linearly or progressively with regard to their height in the direction of the central point (26).

13. Use of a panel-like component according to any one of claims 7 to 12 as a wall element of a railcar body for railway vehicles.

14. Use of a panel-like component according to any one of claims 7 to 12 as a construction unit for ships, airplanes, motor vehicles, transport and supply containers, containers, screens for buildings or the like.

15. Use of a panel-like component according to any one of claims 7 to 12 as an acoustic damping element.

## Revendications

1. Procédé pour augmenter la rigidité de grandes surfaces (12) d'éléments de construction plats (10), selon lequel les éléments de construction (10) sont dotés de structures de renforcement et ces structures de renforcement sont produites grâce à l'assemblage supplémentaire d'au moins une structure de revêtement supplémentaire (16) sur l'une au moins des grandes surfaces (12) des éléments (10), **caractérisé en ce que** des structures de revêtement individuelles (16) sont associées à des zones définies (20) de l'élément de construction (10), en provoquant en partie une augmentation de la rigidité de celui-ci, et **en ce que** les structures de revêtement (16) sont posées sur les grandes surfaces (12) en étant divisées en segments individuels en forme de nervures (24), et constituent sous la forme de segments (24) les structures de revêtement (16).

2. Procédé selon la revendication 1, **caractérisé en ce qu'**une position, un dimensionnement et un contour de la structure de revêtement (16) sont calculés grâce à une valeur prédéfinie de la rigidité pour une zone définie (20) de l'élément de construction (10).

3. Procédé selon la revendication 1 ou 2,
**caractérisé en ce que** la structure de revêtement supplémentaire (16) est posée par collage à chaud ou à froid d'un matériau de revêtement sur la ou les grandes surfaces (12).

4. Procédé selon les revendications 1 ou 2,
**caractérisé en ce que** la structure de revêtement (16) est produite par injection de matière plastique sur la ou les grandes surfaces (12).

5. Procédé selon les revendications 1 ou 2,
**caractérisé en ce que** la structure de revêtement (16) est obtenue par brasage de nervures en fil métallique, par fusion de poudre métallique ou par soudage de cordons de soudure métalliques à l'aide d'un procédé d'assemblage thermique.

6. Procédé selon la revendication 5, **caractérisé en ce que** l'assemblage se fait par soudage au laser.

7. Elément de construction plat avec au moins une structure de renforcement partielle, la ou les structures de renforcement étant formées par une structure de revêtement (16) assemblée en supplément sur l'une au moins des grandes surfaces (12) de l'élément de construction (10), **caractérisé en ce que** des structures de revêtement individuelles (16) sont associées à des zones définies (20) de l'élément de construction (10) et **en ce que** les structures de revêtement (16) sont divisées en segments individuels en forme de nervures (24) et constituent sous la forme de segments (24) les structures de revêtement (16).

8. Elément de construction plat selon la revendication 7, **caractérisé en ce que** les structures de revêtement en forme de segments (16) sont disposées symétriquement, en particulier par rapport à un point, autour d'un centre (26).

9. Elément de construction plat selon les revendications 7 et 8, **caractérisé en ce que** les structures de revêtement (16) sont en matière plastique.

10. Elément de construction plat selon les revendications 7 et 8, **caractérisé en ce que** les structures de revêtement (16) sont en métal.

11. Elément de construction plat selon les revendications 9 ou 10, **caractérisé en ce que** les segments (24) d'une structure de revêtement (16) présentent la même hauteur.

12. Elément de construction plat selon les revendications 9 ou 10, **caractérisé en ce que** les segments (24) d'une structure de revêtement (16) ont une hauteur qui va en augmentant ou en diminuant, linéairement ou progressivement, en direction du centre (26).

13. Utilisation d'un élément de construction plat selon l'une des revendications 7 à 12 comme élément de paroi d'une caisse de wagon pour des véhicules ferroviaires.

14. Utilisation d'un élément de construction plat selon l'une des revendications 7 à 12 comme unité de construction pour des bateaux, des avions, des véhicules automobiles, des réservoirs de transport et de stockage, des conteneurs, des panneaux écrans pour bâtiments, etc.

15. Utilisation d'un élément de construction plat selon l'une des revendications 7 à 12 comme élément d'isolation acoustique.
